Europäisches Patentamt

European Patent Office

Office européen des brevets

(11) Numéro de publication: **0 209 479 B1**

# FASCICULE DE BREVET EUROPEEN

(45) Date de publication de fascicule du brevet:
08.05.91

(51) Int. Cl.⁵: **B60R 25/02**

(21) Numéro de dépôt: 86430026.4

(22) Date de dépôt: **11.07.86**

(54) Antivol pour véhicules automobiles.

(30) Priorité: **17.07.85 ES 288155 U**

(43) Date de publication de la demande:
**21.01.87 Bulletin 87/04**

(45) Mention de la délivrance du brevet:
**08.05.91 Bulletin 91/19**

(84) Etats contractants désignés:
**BE CH DE FR GB IT LI NL**

(56) Documents cités:
**BE-A- 891 637      FR-A- 514 387
FR-A- 533 814      GB-A- 269 500
US-A- 1 423 955    US-A- 1 588 421
US-A- 2 152 565**
(73) Titulaire: **DUCH PATCHI, Cipriano
c/. Cartagena, 14
E-17005 Gerona(ES)**

(72) Inventeur: **DUCH PATCHI, Cipriano
c/. Cartagena, 14
E-17005 Gerona(ES)**

(74) Mandataire: **Marek, Pierre
28 & 32 rue de la Loge
F-13002 Marseille(FR)**

## Description

La présente invention concerne un antivol pour véhicules automobiles qui, grâce à ses caractéristiques structurales nouvelles, apporte à l'utilisateur, de notables avantages par rapport aux autres dispositifs existant sur le marché et destinés à une application analogue.

On connaît notamment des dispositifs antivol comprenant un élément résistant d'amarrage de forme allongée rigide (BE-A-891.637) ou flexible (GB-A-269.500), dont l'une des extrémités est pourvue d'un embout de fixation agencé de façon à pouvoir être fixé, de manière amovible, au volant d'un véhicule automobile, et dont la seconde extrémité est munie d'un embout d'ancrage agencé de manière à pouvoir être assujetti de façon provisoire ou permanente à un organe intérieur fixe déterminé dudit véhicule automobile.

Ces dispositifs antivols ont pour premier inconvénient d'être conçus pour être fixés, de manière provisoire ou permanente, sur des organes fixes bien déterminés et immuables des véhicules automobiles, de sorte que l'on est conduit à réaliser des antivols spéciaux pour chaque type de véhicule.

Un autre inconvénient de ces dispositifs antivols découle du fait qu'il n'est pas possible de changer le point d'ancrage provisoire ou permanent de l'élément d'amarrage sans effectuer un travail nécessitant un outillage adéquat et, généralement, l'intervention d'un spécialiste.

Un autre inconvénient découlant des précédents, est que, lorsque l'élément d'amarrage est prévu pour être fixé de manière permanente sur le véhicule (GB-A-269.500), la permanence de l'ancrage dudit élément peut occasionner une gêne pour le conducteur ou pour le passager, suivant la situation de cet ancrage, sans qu'il soit possible d'y remédier.

L'antivol selon la présente invention a notamment pour but de remédier à ces inconvénients.

Selon l'invention, cet objectif est atteint grâce à un antivol du genre susmentionné, cet antivol étant remarquable par le fait que l'embout d'ancrage permanent est conçu pour être fixé, de manière amovible, sur divers organes fixes du véhicule et comprend, d'une part, une tige filetée solidement reliée à l'extrémité correspondante de l'élément flexible et résistant d'amarrage et, d'autre part, un crochet en forme de U dont une extrémité affecte la forme d'un anneau et dont l'autre extrémité est munie d'une bague taraudée ou écrou disposée en alignement avec ledit anneau, de manière à permettre, d'abord, le passage de l'extrémité de l'élément d'amarrage pourvue de la tige filetée à travers l'anneau puis, ensuite, le vissage de ladite tige dans ladite bague taraudée.

Grâce à cette caractéristique, il est très facile de détacher l'antivol par rapport à son point d'ancrage permanent, soit pour l'enlever définitivement, soit pour le changer de place. En effet, après avoir désaccouplé l'antivol par rapport au volant du véhicule, il suffit de dévisser la tige filetée pour la désolidariser de la bague taraudée et pouvoir ouvrir ainsi l'embout d'ancrage ; cette manoeuvre étant, bien entendu, tout à fait impossible lorsque l'antivol est fixé sur ledit volant, les deux embouts de fixation et d'ancrage équipant, respectivement, les deux extrémités de l'élément d'amarrage, assurant l'inviolabilité des fixations de ces extrémités.

L'antivol ainsi réalisé est totalement innovant, compte tenu du fait que dans aucune autre réalisation de l'état de la technique actuel, l'élément résistant d'amarrage ne possède la propriété d'être flexible ni la particularité de pouvoir demeurer assujetti, de façon permanente, à un organe fixe du véhicule, après avoir été détaché du volant dudit véhicule et durant la marche de celui-ci, sans que la présence dudit élément d'amarrage ne constitue une gêne quelconque ou une entrave à la tâche du conducteur.

Un autre avantage de l'antivol selon l'invention est qu'il peut exercer efficacement sa fonction, sans qu'il soit nécessaire de maintenir sur lui une tension excessive. D'autre part, il peut être fixé, à demeure, à l'endroit le plus commode et le plus accessible à l'intérieur de l'habitacle des véhicules automobiles, contrairement aux dispositifs antivols connus qui doivent toujours être fixés de manière amovible sur l'une quelconque des pédales, lesquelles sont presque toujours disposées en retrait sous le tableau de bord et sont donc d'un accès très incommode rendant difficile et malaisées, surtout la nuit et avec peu de lumière, les manoeuvres de mise en place et de verrouillage desdits antivols sur lesdites pédales.

Compte tenu de sa flexibilité, l'antivol selon l'invention peut, lorsqu'ils n'est pas utilisé, être rangé en divers emplacements du véhicule, en fonction du modèle de véhicule automobile concerné. En outre, la nature flexible de l'élément d'amarrage et le fait de pouvoir maintenir l'une de ses extrémités fixée à demeure à un organe fixe du véhicule, confèrent une grande polyvalence positionnelle à l'antivol lorsqu'il n'est pas en service et assurent une bonne stabilité de ce dispositif.

Selon une autre caractéristique, l'antivol selon l'invention est encore remarquable par le fait que l'élément flexible et résistant d'amarrage est constitué par une solide chaîne ou par un robuste câble renforcé présentant les qualités requises de résistances à d'importants efforts de coupure ou de rupture, cette chaîne ou ce câble pouvant être logé(e) dans une gaine souple également dotée des propriétés souhaitables, ledit élément flexible et résistant d'amarrage ainsi exécuté étant solidement relié, à demeure, par l'intermédiaire de ses extrémités opposées, au corps de l'embout de fixation au volant et à la vis filetée de l'embout d'ancrage permanent, respectivement.

La planche de dessins annexée illustre, à titre d'exemple non limitatifs, un mode d'exécution intéressant de l'antivol selon la présente invention. Dans cette planche de dessins :

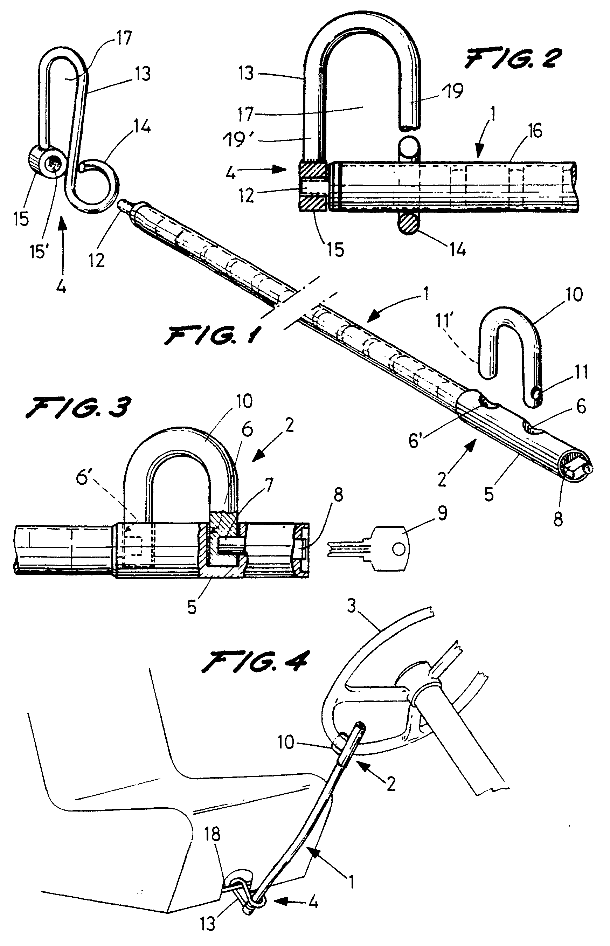

La figure 1 est une vue en perspective de cet antivol dont les principales parties constitutives sont représentées séparées.

Les figures 2 et 3 sont des vues de détail, à plus grande échelle et avec coupes partielles des embouts de fixation équipant les extrémités de l'antivol.

La figure 4 est une vue en perspective illustrant un exemple de montage de l'antivol sur un véhicule automobile.

Comme le montrent les dessins, l'antivol selon la présente invention comprend essentiellement un élément résistant d'amarrage 1 flexible et de forme allongée, dont l'une des extrémités est pourvue d'un embout de fixation 2, agencé de façon à pouvoir être fixé, de manière amovible, sur le volant 3 d'un véhicule, et dont la seconde extrémité est munie d'un embout d'ancrage permanent 4.

L'embout de fixation 2 équipant l'une des extrémités de l'élément d'amarrage flexible et résistant 1, comprend un robuste corps cylindrique 5 dans lequel sont ménagés deux trous ou orifices borgnes 6, 6' dont les entrées sont alignées sur une même génératrice dudit corps. Dans l'extrémité libre du corps 5, est logée une serrure de sûreté 8 du genre comportant un pêne 7 coulissant axialement. Ce pêne peut occuper une position saillante suivant laquelle il se trouve engagé dans le trou borgne 6 le plus proche de l'extrémité libre du corps dans laquelle est installée la serrure 8, et une position escamotée selon laquelle ledit pêne se trouve retiré dudit trou.

L'embout de fixation 2 comprend encore un robuste étrier 10 en forme de U dans les extrémités duquel sont ménagés des logements 11, 11' constitués par des trous borgnes dont les axes sont alignés et dont les entrées sont disposées sur le côté extérieur des branches dudit étrier. Les extrémités des branches de l'étrier 10 et les trous borgnes 6, 6' ont un espacement identique et les extrémités desdites branches ont un diamètre permettant leur engagement, sans jeu notable, dans lesdits trous borgnes du corps 5, lorsque le pêne 7 de la serrure 8 se trouve en position escamotée. Pour obtenir le verrouillage solide de l'étrier 10 sur le corps 5, il suffit donc d'amener le pêne 7 de la serrure 8 dans le logement 11 ou 11' de la branche dudit étrier engagée dans le trou borgne 6, au moyen de la clef 9 de ladite serrure.

On comprend que grâce à cette construction, l'extrémité de l'antivol équipée de l'embout de fixation 2 peut être assujettie au volant 3 du véhicule, ou désolidarisée dudit volant, de façon rapide et commode.

On conçoit aussi que les dimensions des organes constituant l'embout de fixation qui vient d'être décrit peuvent être adaptées aux formes et aux dimensions des volants des véhicules, au moyen d'un mode d'exécution universel ou spécifique.

L'embout d'ancrage permanent 4 comprend, d'une part, une tige filetée 12 solidaire, solidement et à demeure, de l'extrémité correspondante de l'élément d'amarrage résistant et flexible 1, et, d'autre part, un crochet 13 qui affecte une forme générale en U et comporte deux branches parallèles ou sensiblement parallèles 19, 19' assemblées par une portion courbe. L'extrémité de l'une des branches de ce crochet (branche 19) est recourbée de manière à constituer un anneau 14, tandis que l'extrémité de sa seconde branche (branche 19') est munie d'une bague 15 pourvue d'un taraudage 15'. La bague taraudée ou écrou 15 et l'anneau 14 sont alignés en regard l'un de l'autre. De la sorte, il est possible d'engager l'extrémité de l'élément d'attache 1 pourvue de la tige filetée 12 dans l'anneau 14 et de visser ladite tige dans la bague taraudée 15.

Grâce à cet embout d'ancrage, l'antivol selon l'invention peut être fixé de manière durable ou permanente, au moyen de son extrémité munie de cet embout, à un organe fixe quelconque de l'habitacle d'un véhicule, ou bien à une partie quelconque de l'armature 18 du siège de ce véhicule (comme c'est le cas pour le mode d'utilisation illustré à la figure 4) ou autre équipement fixe de ce dernier. Pour cela, il suffit, en effet, d'engager un organe fixe du véhicule ou de son équipement intérieur (par exemple armature rigide 18 du siège du conducteur) dans l'espace 17 ménagé entre les branches 19,19' du crochet 13, avant de fermer cet espace en introduisant l'extrémité de l'élément d'amarrage 1 pourvue de la tige filetée 12 à travers l'anneau 14 et en vissant cette tige dans la bague taraudée 15.

On conçoit que l'antivol selon l'invention est d'une polyvalence remarquable en ce qui concerne le choix du point d'ancrage permanent dudit antivol. On souligne qu'il est aussi possible de réaliser des crochets 13 qui, tout en étant fonctionnellement identiques au crochet précédemment décrit, présentent une géométrie spécialement adaptée pour une utilisation spécifique sur certains types ou modèles de véhicules.

Un autre avantage conféré par l'embout d'ancrage 4 décrit ci-dessus, réside dans le fait qu'il est possible de changer de point d'ancrage avec la plus grande facilité, sans avoir besoin de l'intervention d'un spécialiste quelconque, étant donné que, pour ce faire, il suffit d'ouvrir le crochet 13 en dévissant la tige filetée 12 et en faisant coulisser l'extrémité correspondante de l'élément d'amarrage 1 dans l'anneau 14, pour le dégager de l'organe sur lequel il est fixé et pour pouvoir ensuite l'ancrer, par une manoeuvre inverse, sur un autre organe fixe du véhicule ou de son équipement intérieur.

L'élément d'amarrage résistant et flexible 1 peut être constitué par une robuste chaîne ou par un solide câble renforcé, présentant les qualités de résistance requises à toutes forces tendant à produire sa coupure ou sa rupture, et dont les extrémités sont solidement reliées, de toute manière appropriée, aux embouts de fixation 2 au volant 3 et d'ancrage permanent 4, respectivement. L'élément d'amarrage peut être gainé ou chemisé au moyen d'une enveloppe souple 16 exécutée dans tout matériau approprié tel que matière plastique ou autre.

Afin de réaliser une certaine homogénéité dans les qualités de résistance de tous les éléments de l'antivol, il est avantageux de réaliser l'élément d'amarrage résistant et flexible 1 de l'antivol, au moyen d'un câble blindé à très forte résistance du genre de celui qui est illustré sur les dessins.

**Revendications**

1. Antivol pour véhicules automobiles, comprenant un élément résistant d'amarrage (1) flexible et de forme allongée, dont l'une des extrémités est pourvue d'un embout de fixation (2) agencé de façon à pouvoir être fixé, de manière amovible, au volant (3) d'un véhicule automobile, et dont la seconde extrémité est munie d'un embout d'ancrage permanent (4) agencé de manière à pouvoir être assujetti de façon durable ou permanente à un organe intérieur fixe (18) dudit véhicule automobile, caractérisé en ce que l'embout d'ancrage permanent (4) est conçu pour être fixé, de manière amovible, sur divers organes fixes (18) du véhicule et comprend, d'une part, une tige filetée (12) solidaire, solidement et à demeure, de l'extrémité correspondante de l'élément flexible et résistant d'amarrage (1) et, d'autre part, un crochet (13) en forme de U dont une extrémité est munie d'une bague taraudée ou écrou (15) et dont l'autre extrémité affecte la forme d'un anneau (14) disposé en alignement avec ladite bague taraudée, de façon à permettre le passage de l'extrémité correspondante de l'élément d'amarrage (1) à travers ledit anneau (14) et le vissage de ladite tige filetée (12) dans ladite bague taraudée (15).

2. Antivol selon la revendication 1, caractérisé en ce que l'élément flexible et résistant d'amarrage (1) est constitué par une solide chaîne ou par un câble renforcé, cette chaîne ou ce câble étant, de préférence, logé (e) dans une gaine souple (16), ledit élément flexible et résistant d'amarrage ainsi réalisé étant solidement relié, à demeure, par l'intermédiaire de ses extrémités opposées, au corps (5) de l'embout de fixation (2) au volant (3) et à la tige filetée (12) de l'embout d'ancrage permanent (4), respectivement.

**Claims**

1. Antitheft device for motor vehicles, comprising a strong, long and flexible securing element (1), one of whose ends has a fastening piece (2) designed so as to be capable of being fixed to and detached from the steering wheel (3) of a motor vehicle, and whose other end has a permanent anchoring piece (4) designed so as to be capable of being fastened in a durable or permanent manner to a fixed interior member (18) of the said motor vehicle, characterised by the fact that the permanent anchoring piece (4) is designed so as to be capable of being fixed to and detached from various fixed members (18) of the motor vehicle and comprises firstly a threaded rod (12) solid with the relevant end of the flexible securing element (1) of which it forms a permanent part, and secondly a U-shaped hook (13) one of whose ends has a tapped collar or nut (15), and whose other end is in the shape of a ring (14) in alignment with the said threaded collar, so as to allow the relevant end of the securing element (1) to pass through the said ring (14) and the said threaded rod (12) to be screwed into the said tapped collar (15).

2. Antitheft device according to claim 1, characterised by the fact that the flexible securing element (1) comprises a solid chain or reinforced cable, such chain or cable being preferably housed inside a flexible sheath (16), the said flexible securing element (1) thus created being solidly and permanently linked by its opposing ends to the body (5) of the fastening piece (2) attached to the steering wheel (3), and to the threaded rod (12) of the permanent anchoring piece (4) respectively.

**Ansprüche**

1. Diebstahlsicherung für Kraftfahrzeuge, bestehend aus einem widerstandsfähigen, elastischen Verspannungselement (1) länglicher Form, dessen eines Ende mit einer Klemmbefestigung (2) versehen und so ausgebildet ist, daß sie abnehmbar am Lenkrad (3) eines Kraftfahrzeugs befestigt werden kann, und dessen anderes Ende mit einer stationären Verankerungsklemme (4) versehen und so ausgebildet ist, daß sie haltbar oder stationär mit einem internen, fest eingebauten Organ (18) des Kraftfahrzeugs verbunden werden kann, **dadurch gekennzeichnet**, daß die stationäre Verankerungsklemme (4) so gestaltet ist, daß sie abnehmbar an verschiedenen fest eingebauten Organen (18) des Fahrzeugs befestigt werden kann, und einerseits einen mit dem entsprechenden Ende des elastischen und widerstandsfähigen Verspannungselement (1) fest und bleibend verankerten Gewindebolzen (12), und andererseits einen U-förmigen Haken (13) aufweist, dessen eines Ende mit einer Buchse mit Innengewinde oder Schraubenmutter (15) versehen ist, und dessen anderes Ende die Form eines Ringes (14) annimmt, der mit der Buchse mit Innengewinde fluchtet, um das entsprechende Ende des Verspannungselements (1) durch den Ring (14) hindurchführen zu können und die Verschraubung des Gewindebolzens (12) in der Buchse mit Innengewinde (15) zu ermöglichen.

2. Diebstahlsicherung nach Anspruch 1, **dadurch gekennzeichnet**, daß das elastische und widerstandsfähige Verspannungselement (1) aus einer kräftigen Kette oder einem verstärkten Kabel besteht, wobei diese Kette oder dieses Kabel vorzugsweise in einer biegsamen Umhüllung (16) untergebracht ist, und das in dieser Art ausgeführte elastische und widerstandsfähige Verspannungselement (1), bleibend, an seinen gegenüberliegenden Enden, mit dem Körper (5) der Klemmbefestigung (2) am Lenkrad (3) bzw. mit dem Gewindebolzen (12) der stationären Verankerungsklemme (4) fest verbunden ist.

FIG. 1
FIG. 2
FIG. 3
FIG. 4